# EUROPEAN PATENT SPECIFICATION

(11) **EP 3 307 649 B1**
(45) Date of publication and mention of the grant of the patent: **02.10.2019**
(21) Application number: 16741135.4
(22) Date of filing: 06.06.2016
(51) Int. Cl.: B65D 85/804

(54) **A RE-USABLE CONTAINER FOR SUBSTANCES FOR THE PREPARATION OF LIQUID BEVERAGES, PARTICULARLY COFFEE**
WIEDERVERWENDBARER BEHÄLTER FÜR SUBSTANZEN ZUR ZUBEREITUNG VON GETRÄNKEN INSBESONDER KAFFEE
CAPSULE REUSABLE POUR DES SUBSTANCES POUR LA PREPARATION DES BOISSONS ET EN PARTICULIER DU CAFÉ

(30) Priority: 10.06.2015 IT UB20151341
(43) Date of publication of application: 18.04.2018
(73) Proprietor: De Ruvo, Davide, 10124 Torino (IT); Pibiri, Matteo, 10141 Torino (IT); Rossi, Matteo, 10125 Torino (IT)
(72) Inventor: De Ruvo, Davide, 10124 Torino (IT); Pibiri, Matteo, 10141 Torino (IT); Rossi, Matteo, 10125 Torino (IT)
(74) Representative: De Bonis, Paolo
(86) International application number: PCT/IB2016/053300
(87) International publication number: WO 2016/199007

(56) References cited:
- EP-A1- 1 364 605
- EP-A1- 2 239 211
- WO-A1-2013/038382
- CH-A2- 703 211
- DE-U1-202010 002 994
- US-A1- 2015 056 331

## Description

### Field of the invention

The present invention relates to re-usable containers for substances for the preparation of a liquid beverage, designed in particular for use as capsules for a machine for dispensing beverages. More in particular, the invention has been developed with particular reference to re-usable containers of the type comprising:
- a first end portion,
- a second end portion,
- a shell comprised between said first end portion and second end portion and delimiting therewith an internal volume of the container configured for housing a substance for the preparation of a liquid beverage,
wherein:
- said first end portion includes one or more first apertures configured for allowing the inlet of a liquid into said internal volume,
- said second end portion including a plurality of second apertures configured for allowing the outlet of a beverage that can be obtained by interaction of said liquid with a substance for the preparation of a liquid beverage within said internal volume,
wherein furthermore at least one of said first end portion and second end portion is removable.

### Prior art

The state of the art offers numerous examples of re-usable containers for substances for the preparation of a liquid beverage commonly designated by the name of "pods" or "capsules".

These substances include, for example, beverages in powder or granular form, thereby meaning the powders (e.g., ground coffee) or granules by means of which it is possible to prepare the beverage.

In particular, the production of disposable containers for ground coffee is particularly vast, as emerges from a considerable number of examples of re-usable containers for coffee (or other powdered beverages in powder form).

Known solutions of containers for powdered beverages in powder form, in particular coffee, are available, for example, from the documents Nos. WO 2014/041419 A1, US 2014/0272048 A1 and FR 2 946 854 B3. Each of the containers forming the subject of the above documents is re-usable thanks, amongst other things, to the fact that a removable end portion is provided.

However, each of the solutions described in the above documents presents some non-negligible drawbacks. In particular, the capsules of the first two documents mentioned are rather complex to produce and maintain, the user having periodically to carry out washing of the containers after use. In particular, the container of the document No. US 2014 0272048 A1 is characterized by a plurality of components that require disassembly when they are to be washed and their re-assembly may prove extremely problematical. Another example of such a container can be found in CH 703 211 A2.

Finally, each of the aforementioned documents, as likewise a plurality of other examples available in the prior art, limits the sphere of interest to just the technical solutions that enable the container to be rendered re-usable, without tackling systematically the problem of ensuring - at the same time - the quality of the beverage produced. The quality is moreover liable to be affected by the large number of components that make up the container, which are frequently made of different materials that interact in a way that is not always foreseeable with the hot beverage being made, altering the taste thereof.

As is known, a container for powdered beverages in powder form includes a first end portion provided with one or more apertures for inlet for a liquid, typically water at a temperature close to boiling point, and a plurality of outlet apertures on a second end portion, through which the beverage obtained by interaction (percolation or infusion) of the hot liquid with the powdered beverage in powder form contained in the internal volume of the container exits. In this sense, the examples available in the framework of the prior art show that the search for a configuration that enables re-usability of the container inevitably leads to relegating aspects such as the simplicity of production thereof and/or the search for the best quality of the beverage.

### Object of the invention

The object of the present invention is to solve the technical problems mentioned previously. In particular, the object of the invention is to provide a re-usable container for substances for the preparation of liquid beverages that will be characterized by a high level of simplicity of production and that at the same time will be able to guarantee a high quality of the beverage produced.

### Summary of the invention

The object of the invention is achieved by a re-usable container having the features forming the subject of one or more of the appended claims, which form an integral part of the technical disclosure provided herein in relation to the invention.

In particular, the object of the invention is achieved by a container having all the features listed at the beginning of the present description and moreover characterized in that each aperture on the second end portion is defined by at least one slot.

### Brief description of the drawings

The invention will now be described with reference to the annexed plates of drawings, which are provided purely by way of non-limiting example and in which:
- Figure 1 is a perspective view of a container for a substance for preparation of a liquid beverage according to various embodiments of the invention;
- Figure 2 is a perspective view according to the arrow II of Figure 1;
- Figure 3 is a plan view from outside of a second end portion of the container according to the invention;
- Figures 3A and 3B illustrate alternative embodiments of the second end portion of the container according to the invention;
- Figure 4 is a plan view from outside of a first end portion of the container according to the invention;
- Figure 5 is a front elevation of a container according to various embodiments of the invention;
- Figures 6 and 7 are longitudinal sections of the container of Figure 5 referring to a first operating condition and to a second operating condition;
- Figures 8, 9, and 10 are similar, respectively, to Figures 5, 6, and 7, but refer to a container according to further embodiments of the invention; and
- Figures 11 to 15 illustrate further embodiments of the second end portion according to an advantageous aspect of the invention.

### Detailed description

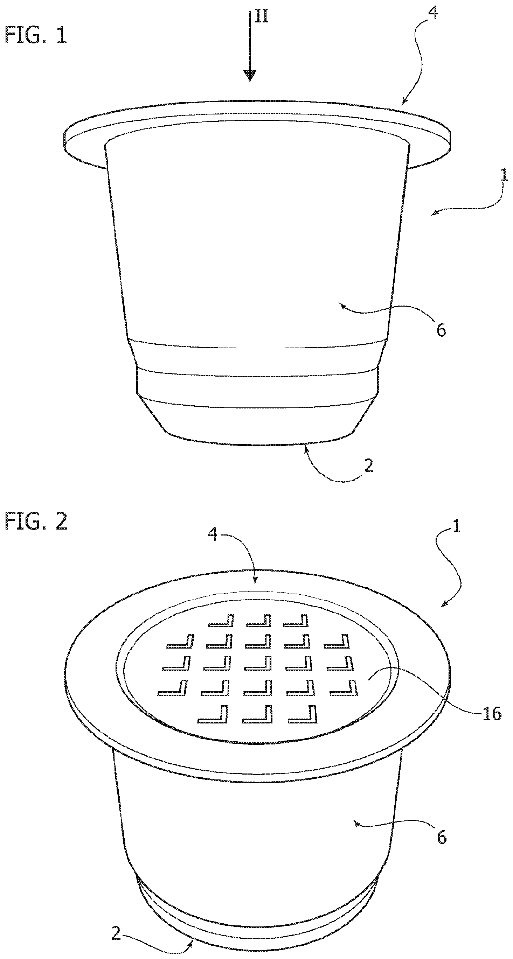

With reference to Figure 1, the reference number 1 designates as a whole a container for a substance for preparation of a liquid beverage according to various preferred embodiments of the invention. The present description will be developed principally with reference to a substance such as a powdered beverage, in particular coffee, where the term "powdered beverage" is meant a powder for the preparation of the beverage itself. However, the present description may in general be applied to any substance for the preparation of a liquid beverage.

The container 1 is of a re-usable type and is in particular designed for use as cartridge for a machine for dispensing beverages, which normally functions with containers for powdered beverages in powder form that are not re-usable.

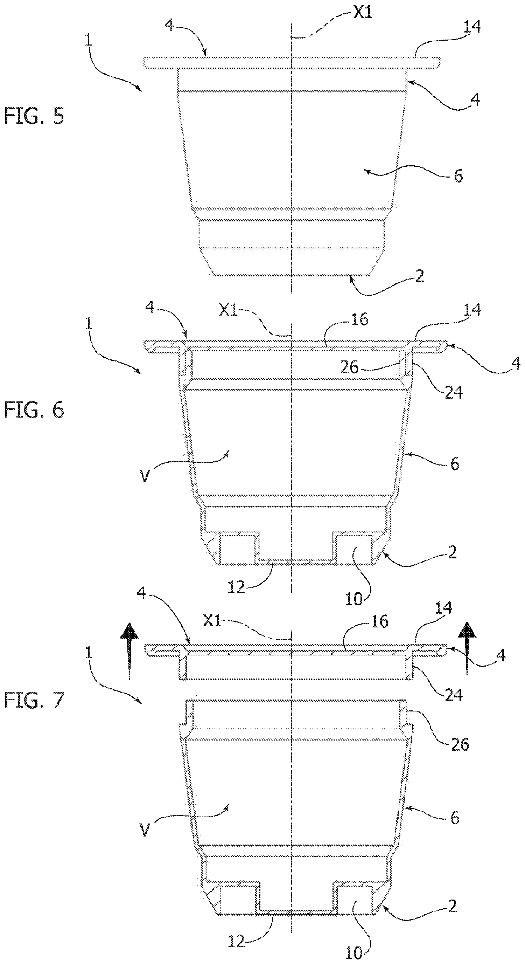

The container 1 includes a first end portion 2, a second end portion 4, and a shell 6 that is comprised between the first and second end portions 2, 4 and delimits an internal volume V (Figures 6, 7 and 9, 10) of the container that is designed to house a powdered beverage. Preferably, the container 1 has a substantially frustoconical shape with axis X1, in so far as the diameter of the end portion 2 is smaller than the diameter of the end portion 4, so that the shell 6 assumes the conformation of a wall with a substantially conical geometry. Except for the provision of apertures on the end portions 2 and 4, the body of the container 1 is of axisymmetrical type with respect to the axis X1.

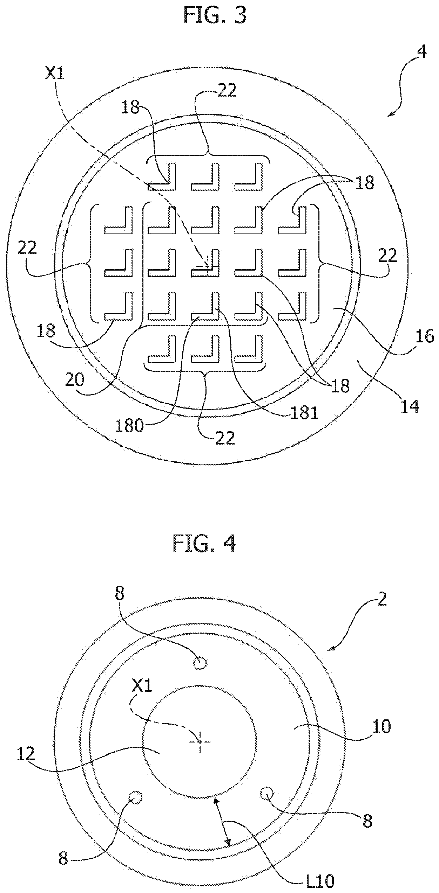

With reference to Figure 4, the first end portion 2 includes at least one first through aperture 8 (i.e., in communication with the internal volume of the container) configured for allowing the inlet of a liquid into the internal volume V. In the embodiment illustrated herein, the end portion 2 includes three apertures 8 arranged at equal angular distances apart. Preferably, the apertures 8 are made within an annular groove 10, which develops axially in the body of the end portion 2 and surrounds a central relief 12, which shares the axis X1, like the groove 10. Preferably, as may be seen in Figure 4, the central relief 12 is provided with a hollow structure (thin wall); i.e., it is not a massive element. However, in some embodiments, the opposite is possible, i.e., provision of the relief 12 as massive element.

It is moreover possible to envisage, in some embodiments, a central through hole at the relief 12 so that it shares the axis X1.

Once again preferably, the groove 10 has a width L10 in the radial direction comprised between 2 mm and 5 mm.

Provision of the apertures 8 within the groove 10, hence in a recessed position with respect to the end of the end portion 2 ensures compatibility with the dispensing machine in so far as normally the area where the groove 10 is located would undergo penetration by needles designed to enable passage of hot liquid, which are normally configured for penetrating disposable capsules.

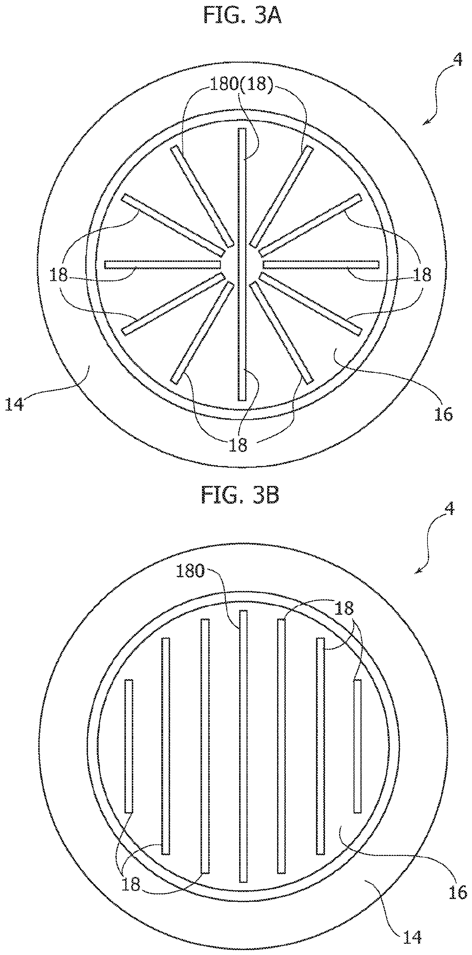

With reference to Figure 3, the second end portion 4 includes a peripheral flange 14, which extends radially beyond the shell 6 so as to provide a reference of axial position (along the axis X1) within the dispensing machine. The end portion 4 moreover includes a central recess 16, which shares the axis X1, that is recessed with respect to the axial end of the flange 14 and provided in which is a plurality of second through apertures 18 (i.e., in communication with the internal volume of the container) configured for allowing the outlet of a beverage obtained by interaction of a liquid - previously introduced into the volume V through the apertures 8 - with the powdered beverage that is housed within the volume V.

According to the invention, each of the apertures 18 is pre-formed - i.e., they do not have to be formed by the ensemble of needles of the dispensing machine (the so-called "needle array") at the moment of insertion of the container 1 therein - and has a geometry defined by at least one slot.

By the term "slot" is meant an aperture having a layout (hence, by definition, a geometry belonging to a plane) characterized by a primary (predominant) development direction and a secondary development direction, along which the dimensions of the layout are considerably smaller than the dimensions in the primary (predominant) development direction.

In various preferred embodiments represented in the figures annexed hereto, each aperture 18 is defined by at least one rectilinear slot. The term "rectilinear slot" designates, according to the definition referred to above, an aperture having a layout (hence, by definition, a geometry belonging to a plane) having a substantially rectangular shape that develops in a prevalent way along just one of the two dimensions in the plane (primary and predominant development direction), whereas the other dimension is characterized by an extremely limited development. To provide an analogy, a rectilinear slot may have a layout shaped like an I.

In particular, in the present description it is assumed by way of reference that the one or more rectilinear slots that come to make up each aperture 18 develop in a prevalent way in the direction of length, with minimal development in the direction of width necessary just to provide, physically, a passageway. It should be noted that the joining of a number of mutually incident rectilinear slots enables broken-line geometries (for example "L", "Z", "U", etc.) or cross-shaped geometries ("X", "T", etc.) to be obtained.

In alternative embodiments, the primary and predominant development direction may be a curvilinear path. In this case, the corresponding slots will be referred to as curvilinear, namely, having a layout where the primary (predominant) development direction is the aforesaid curvilinear path, and the secondary development direction is the dimension transverse to the curvilinear path. Examples of curvilinear slots are C-shaped or else S-shaped slots.

In general, the slots that define the apertures 18 have a ratio between the dimension in the primary, or predominant, development direction (linear length in the case of rectilinear slots; extension of the curvilinear path in the case of curvilinear slots) and the dimension in the secondary development direction (width for the rectilinear slots; dimension transverse to the curvilinear path of development in the case of curvilinear slots) comprised between 3 and 100, more preferably between 6 and 10.

Purely by way of example, without this constituting any limitation for the purposes of the invention, the dimension in the secondary direction may preferably be comprised between 0.3 mm and 0.4 mm, whereas the dimension in the primary direction may be comprised between 2.5 mm and 3 mm.

However, in some embodiments, the dimension in the primary direction may reach approximately 30 mm, from which an aspect ratio of 1:100 is obtained.

An example of these embodiments is illustrated in Figures 3A and 3B. In Figure 3A, the apertures 18 are provided by slots that extend along radial paths and are spaced at equal angular distances apart. Furthermore, one of the apertures, identified by the reference 180, extends along a diametral path traversing practically the entire area of the central recess 16. In this case, the aperture 180 can easily reach the aspect ratio of 1:100 (0.3 mm to 30 mm).

In Figure 3B, the apertures 18 are provided by slots that extend along mutually parallel chordal paths. For this reason, the length of the apertures 18 in the primary development direction decreases from the centre (axis X1) to the periphery of the recess 16. Also in this case, the reference number 180 designates an aperture 18 that extends along a diametral path traversing practically the entire area of the central recess 16. Preferably, the dimension of each aperture in the secondary development direction (width in this case) is constant, but it is possible to envisage embodiments in which this dimension may be made to vary as a function of the distance from the axis X1, for example, to keep the aspect ratio constant, or else to keep the area of the apertures 18 constant (or within a certain range of values).

Whatever the geometrical configuration of the slots, the apertures 18 of the container 1 according to the invention may have a constant cross section through the wall thickness of the recess 16 (or the thickness of the end portion 4 in general, in the case where the recess 16 is not present), or else may have a variable cross section in a direction parallel to the axis X1. In particular, examples of variable cross section comprise a converging cross section (proceeding from the internal volume V to the outside) or diverging cross section (once again from the internal volume V to the outside).

In one embodiment, represented in Figures 2 and 3, each of the apertures 18 is defined by two rectilinear slots 180, 181 mutually incident at 90° to form a L-shaped layout.

Furthermore, in various embodiments (see in this connection all of Figures 2, 3, and 11 to 15) the apertures 18 are arranged according to a regular scheme, the envelope of which substantially defines a cross-shaped geometry, preferably like a Greek cross.

In particular, there may be recognised in the arrangement apertures 18 a central portion 20, which includes a plurality of apertures 18 with L-shaped geometry arranged at the nodes of a lattice with quadrangular, preferably square, meshes and defines as a whole a figure with an envelope that is quadrangular, preferably square. The arrangement moreover includes a periphery having four sets 22 of apertures aligned and arranged parallel to the rows of perimetral apertures of the central portion 20. In the case in point, without this constituting any limitation, the central portion 20 includes nine apertures 18 arranged according to the nodes of a square mesh bordered by four sets of three peripheral apertures, which define the arms shaped like a Greek cross. It is possible in any way to envisage alternative embodiments, in which the envelope of the arrangement of the apertures 18 has a square layout, with an arrangement of 4 x 4 apertures 18 or 5 x 5 apertures 18.

With reference to Figures 1, 2 and 5 to 7, the container 1 according to the invention envisages that at least one of the two end portions 2, 4 is removable. In particular, Figures 5 to 7 illustrate a first type of embodiments in which the first end portion 4 is removable from the container 1.

In particular, with reference to Figures 6 and 7, the second end portion 4 includes a first coupling collar 24 configured for engaging a second coupling collar 26 provided integrally with the shell 6. The first end portion 2 is instead integral with the shell 6.

Preferably, the coupling between the collars 24, 26 is obtained by means of a threaded joint: both of the collars hence carry a thread, which is internal for the collar 24 and external for the collar 26. There are, of course, possible solutions in which the coupling is obtained by slotting, possibly with the provision of an annular sealing element to prevent seepage of liquid.

The removability of the end portion 4 enables loading of the powdered beverage into the internal volume of the container 1 (thus allowing recharging thereof, if needed), facilitated by the fact that the operation of loading is carried out from the side of larger dimensions of the container 1 (namely, the end portion 4).

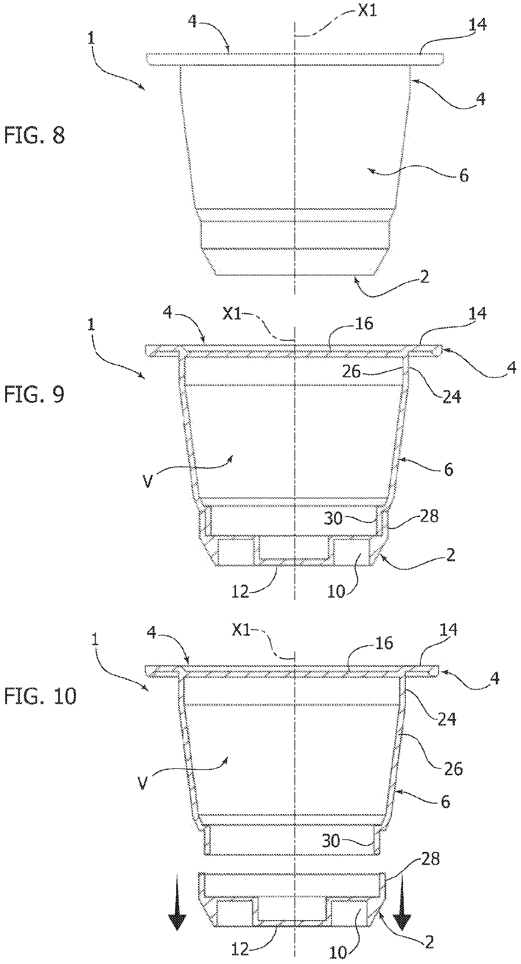

With reference to Figures 8 to 10, in a second type of embodiments of the container 1, it is the first end portion 2 that is removable from the container 1, whereas the end portion 4 is integral with the shell 6. In particular, in these embodiments the first end portion 2 includes a cylindrical coupling collar 28 configured for engaging a second cylindrical coupling collar 30 integral with the shell 6.

As for the container 1 represented in Figures 5 to 7, coupling between the collars 28, 30 is preferably obtained by means of a threaded joint, including, in particular, an internal thread for the collar 28 and an external thread for the collar 30. However, as for the end portion 4, it is possible to envisage a slotted coupling possibly with interposition of an annular sealing element to prevent seepage of liquid.

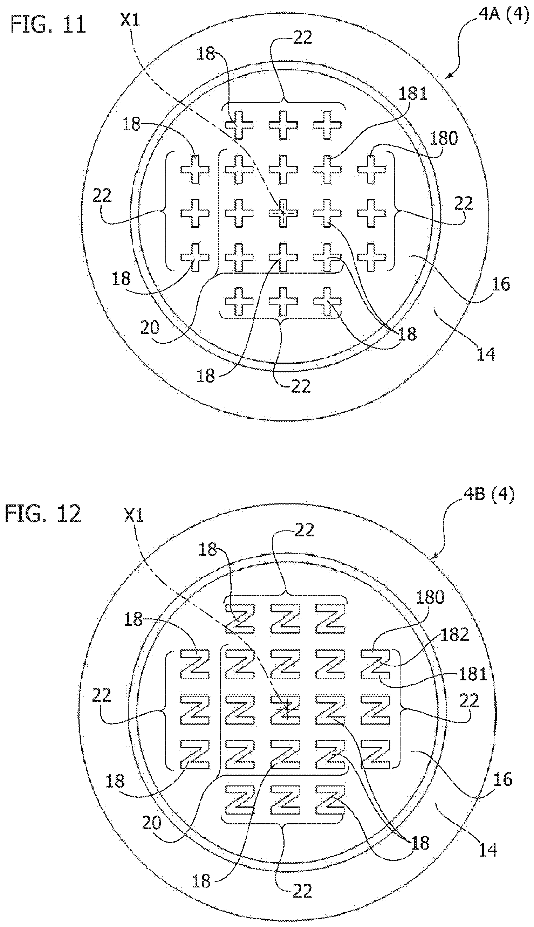

With reference to Figures 11 to 15, there will now be provided a review of variants of the shape of the apertures 18 on the second end portion 4 that characterize as many alternative embodiments, where the apertures 18 in question are defined by at least one rectilinear slot.

The various embodiments of the end portion 4 are designated, for convenience of reference, by the references 4A, 4B, 4C, 4D, 4E, each associated to the reference 4 in brackets to indicate the fact that they are simply variants of the end portion 4 already described.

As general information valid for all the embodiments 4A-4E that will now be described, the arrangement of the apertures 18 on the end portion 4 is identical to what has already been discussed; i.e., it is possible to identify a central portion 20, which includes a plurality of apertures 18 arranged at the nodes of a lattice with quadrangular meshes, preferably square, and defines as a whole a figure with an envelope that is also quadrangular, preferably square. The arrangement moreover includes a periphery having four sets 22 of apertures 18 aligned and arranged parallel to the rows of perimetral apertures of the central portion 20. In all the cases represented in Figures 11 to 15, without this constituting any limitation, the central portion 20 includes nine apertures 18 arranged according to the nodes of a square mesh bordered by four sets of three peripheral apertures 18, which define the arms of a Greek cross. As already described previously, it is possible to apply the same geometrical shapes of the apertures 18 also to embodiments in which the envelope of the arrangement of the apertures 18 is square, with alayout of 4 x 4 apertures 18 or 5 x 5 apertures 18.

Whatever the shape of the apertures 18 selected, it is possible, however, to apply it both to the containers 1 with removable end portion 2 and to the containers 1 with removable end portion 4. In the limit, embodiments may be envisaged where, whatever the geometry of the apertures 18 selected, both of the end portions 2, 4 are removable.

With reference to Figure 11, the apertures 18 of the end portion 4A are defined by a pair of rectilinear slots 180, 181 mutually incident in an orthogonal way to form a geometry that is X-shaped (or shaped like a "+" sign). Preferably, the X-shaped geometry defines a Greek cross (hence with arms of identical length), which presupposes that the slots 180, 181 will have identical length and will intersect at the centre.

The end portion 4B of Figure 12 envisages, instead, a plurality of apertures 18 defined by three rectilinear slots, in particular a first rectilinear slot 180 and a second rectilinear slot 181 mutually parallel and intersecting with a third rectilinear slot 182 set on a diagonal between (i.e., spanning) the two slots 180, 181 and incident to the latter at their (opposite) ends. In this way, each aperture 18 has as a whole the shape of a Z.

Preferably, the length of the slots 180, 181, 182 and the inclination of the slot 182 are chosen in such a way that the Z shape can be inscribed in a square. Of course, it is possible to choose the same dimensions in such a way that the Z shape can as a whole be inscribed in a rectangle.

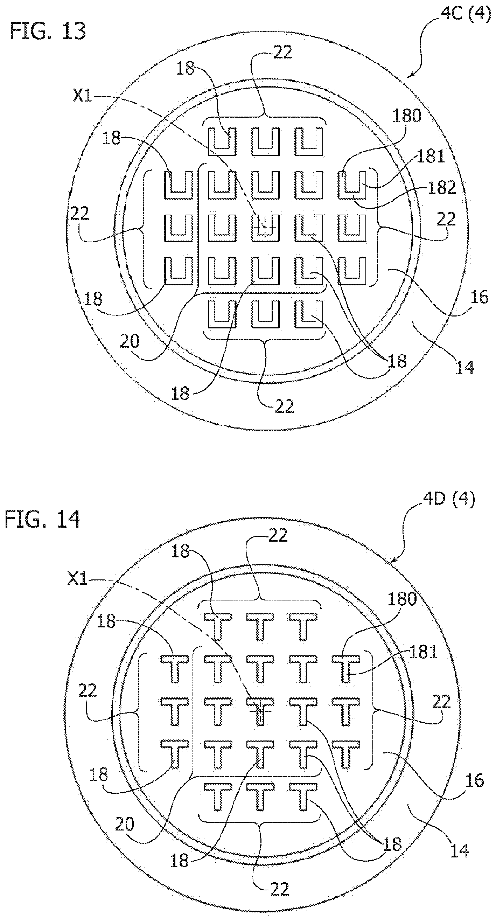

With reference to Figure 13, the apertures 18 of the end portion 4C are, instead, defined by three rectilinear slots, in particular a first rectilinear slot 180, a second rectilinear slot 181, and a third rectilinear slot 182.

The first and second slots 180, 181 are mutually parallel and are intersected by the slot 182 in an orthogonal way and at the (homologous) ends thereof, so as to define a substantially U shape.

Preferably, the U shape defined by the slots 180-182 may be chosen in such a way that it can be inscribed in a square, but it is also possible to choose the dimensions in such a way that the shape can be inscribed in a rectangle. However, in yet a further variant it is possible to provide the intersection between the slot 182 and the slots 180, 181 in a position other than the ends of the slots 180, 181, thus defining an H shape. Again, it is possible for the slots 180, 181 to extend in a way not parallel to the other.

With reference to Figure 14, the apertures 18 of the end portion 4D are defined by the intersection of a first rectilinear slot 180 and a second rectilinear slot 181 that are incident in an orthogonal way and where the slot 181 intersects the slot 180 at the centre, thus defining as a whole a T shape. Also in this case, the size of the slots 180, 181 may be chosen in such a way that the T shape can be inscribed in a square or else in a rectangle. Furthermore, the point of intersection of the slot 181 with the slot 180 may be located, as desired, along the length of the slot 180 in such a way as to provide possibly T shapes with asymmetrical arms.

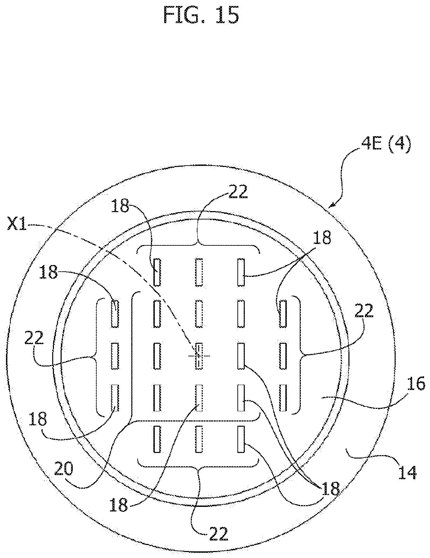

Finally, with reference to Figure 15, the apertures 18 of the end portion 4E are each formed by a single rectilinear slot, which for this reason is designated by the same reference number 18 as that of the aperture itself. In this case, as will be appreciated, given the same transverse dimensions of the slots that constitute the apertures 18, the area of passage for the beverage is minimal as compared to the other embodiments.

The container 1 may be made of any material compatible for use in the food sector and able to withstand the temperatures typical of the liquid used for preparation of the beverage, typically water at a temperature close to boiling point.

In a preferred embodiment, the container 1 is made of metal material, for example, steel or aluminium, with the apertures 18 are obtained by laser cutting or milling, or else blanking.

In alternative embodiments, it is possible to use a plastic material for making the container 1, with savings in terms of production costs. In this case, the container 1 may be made either using traditional techniques of injection moulding or with a 3D printer.

In yet further alternative embodiments it is possible to envisage that the container 1 is made of a number of different materials. In particular, in an advantageous embodiment, it is possible to make the body of the container 1 (end portions 2, 4, and shell 6) of plastic material, and to obtain, by means of added inserts of metal material (or inserts of metal material embedded in the plastic material) the parts of the container that are intrinsically most subject to wear.

In particular, it is possible to obtain the threaded joints that define the coupling interfaces between the removable end portions (2, 4 or both of them) and the shell 6 by means of threaded bushings forced into the collars 24, 26 and 28, 30. In addition or as an alternative, the recess 16 of the end portion 4 may be made as an insert of metal material having the apertures 18 according to any of the patterns described and embedded in the plastic material of the end portion 4, which in this case would be limited to a peripheral annular band corresponding substantially to the flange 14 (or possibly to the ensemble made up by the flange 14 and the collar 28 if the end portion 4 were removable).

Another possible solution consists, for example, in making the end portion 2 of steel and the end portion 4 of aluminium.

As concerns the use of the container 1, the user has the possibility of filling the internal volume V with any powdered beverage, or also any powdered beverage in granular form or in the form of shredded leaves (such as tea).

During development of the invention, the inventors in any case conducted a series of tests with particular reference to a powdered beverage, such as ground coffee. In particular, when the powdered beverage is coffee, provision of the apertures 18 by means of one or more slots made as described previously- whether rectilinear or curvilinear - ensures for coffee a clearly superior quality (given the same blend of coffee used, and not only) as compared to what can be obtained with the traditional circular apertures present on known containers, or else to what can be obtained with apertures that are formed in the end portions of the container at the moment of its insertion into the machine, i.e., when the container is of a disposable type.

With reference to the case of coffee, the hot water delivered by the machine in which the container 1 is used as cartridge floods the container 1 through the access apertures 8 and the internal volume V.

In so doing, the hot water percolates through the coffee in the internal volume V: the interaction between the hot water and the ground coffee, leads to obtaining liquid coffee that flows out of the apertures 18. Provision of the apertures 18 with the criteria described favours a very regular outflow of the liquid during percolation, thus improving as a whole the quality of the beverage.

In this connection, is should be noted that the containers for beverage precursors in powder form, in particular ground coffee, configured for operating within a closed and pre-constituted system, must operate with the following constraints, which is determined by the dispensing machine and cannot hence be modified:
- shape of the container;
- volume of the container;
- amount of liquid (water) at inlet to the container; and
- pressure of the liquid (water) at inlet to the container.

For the specific case of coffee, there moreover exists the need to respect a further constraint of amount of ground coffee present in the capsule, which cannot drop below a threshold value (approximately 4.5 g) without causing a drop in the quality of the resulting espresso coffee.

The container according to the invention enables the objective of a high-quality beverage to be achieved (which in the case of coffee can be define in terms of taste, aroma, intensity, and creaminess), albeit respecting the constraints defined above, thanks to the fact that by providing the apertures 18 by means of one or more slots a correct balance is achieved between the incoming flow of liquid (hot water) and the outflow of beverage (in particular, coffee).

The slot, thanks to its geometry that privileges one development direction, enables the objective referred to above to be achieved as well as possible (in particular with reference to coffee), with the constraints defined above, for the following reasons:
i) having a dimension in the secondary development direction that (preferably) ranges between 0.3 and 0.4 mm, each slot can effectively function as filter, preventing any exit of the ground coffee or of any other soluble powdered beverage present inside the internal volume of the container 1;
ii) the dimensions in the primary development direction, albeit rendering possible to perform the function of filtering described above, enable provision of an area of passage for the beverage that is sufficiently wide to enable a constant outflow of beverage, without risking occlusion of the container and simultaneous blocking of and/or damage to the dispensing machine, a problem that - instead - afflicts rechargeable containers that envisage apertured end portions having traditional geometries with square or circular holes; since the grain size of ground coffee on the market may vary considerably, with the simple solution with hole, the risk of occlusion would be effectively very high in the cases of very fine grain sizes;
iii) thanks to the simultaneous contribution of the dimensions in the primary and secondary directions of development, albeit maintaining the characteristics defined in points i and ii, the container 1 according to the invention ensures setting-up and maintenance of a correct pressure within the container itself, a determining factor for transfer of the taste and aroma characteristic of espresso coffee, as well as for formation of cream; and
iv) in a way similar to point ii), the dimensions in the primary development direction, albeit allowing the function of filtering described in point i) to be performed, enable provision of an area of passage that is sufficiently wide to enable convenient outflow of the cream, which is notoriously less liquid than coffee and which would otherwise risk remaining trapped inside the container, as frequently occurs with rechargeable containers that envisage apertured end portions with traditional geometries with square or circular holes.

Hence, the solution of slot-like apertures, above all in view of what has been noted in points ii), iii) and iv) is particularly effective as compared to other solutions currently in use in so far as it enables the container to operate in optimal conditions also in the cases where the amount of ground coffee introduced into the container approaches the physical filling limit, at the same time guaranteeing an optimal result in terms of taste, aroma, intensity, and creaminess, maintaining an optimal dispensing of the beverage.

It is hence the narrow and elongated shape of the slot (which is the constitutive unit of the apertures 18) that contributes to guaranteeing the correct balance between functionality (the powdered beverage does not come out, and the capsule is not occluded) and taste (correct internal pressure that enables production of the cream and transfer of taste and aroma), also in the presence of the right amount of coffee (from 4.70 to 7.10 g of ground coffee): in fact, the traditional apertures with square or circular holes reveal in an evident way their limits precisely when the amount of coffee is that necessary to guarantee a high-quality espresso coffee. With the above amounts of coffee the holes are frequently subject to occlusions, thus imposing the need to load the container with a smaller amount of ground coffee at the expense of the quality of the end product.

These results are moreover amplified in the container 1 by envisaging the first apertures 8 with the pattern illustrated in Figure 4 (a few holes of small diameter, preferably comprised between 0.3 and 0.5 mm, extremes included).

Of course, all the advantages referred to above apply also in the cases of beverages other than coffee, such as for example, tea, tisanes, camomile, hot chocolate, etc.

To provide a comparative example, on the hypothesis of wishing to obtain the same area of passage as the one afforded by the apertures 18 in any one of the solutions represented the figures (for example, Figure 3) adopting a traditional solution of end portion with circular or square (or in general polygonal) holes, and likewise wishing to guarantee the function of filter described in point 1, more than three hundred holes would be necessary as against - for example - just the twenty-one apertures in Figure 3.

The advantage that derives in terms of simplicity of implementation and of production costs of the container 1 thus becomes even more evident.

It will consequently be appreciated that the structure of the container 1 is extremely simple and inexpensive to produce with any known method. Moreover, the operations of maintenance that are to be carried out by the user are particularly simplified in so far as disassembly of the container 1 can be carried out without recourse to specific equipment and without the need to assemble a large number of components.

To favour disassembly it is moreover possible to provide on the removable end portion a surface texture that improves gripping thereof. For instance, in the case where the removable end portion is the first end portion 2, it is possible to provide an external knurling on the outer surface of the coupling collar 28.

The same applies in the case where the removable end portion is the second end portion 4. In this case, the knurling may conveniently be provided on the shell 6.

In either case (removable end portion 2 or removable end portion 4) a knurling is preferably provided also on the side wall of the flange 14.

Of course, the details of construction and the embodiments may vary widely with respect to what has been described and illustrated herein, without thereby departing from the scope of protection of the present invention, as defined by the annexed claims.

## Claims

1. A re-usable container (1) for a substance for the preparation of a liquid beverage, particularly configured for use as a capsule for a beverage dispensing machine, the container including:
- a first end portion (2),
- a second end portion (4),
- a shell (6) comprised between said first end portion and second end portion (2, 4) and delimiting therewith an internal volume (V) of the container (1) configured for housing a substance for the preparation of a liquid beverage,
wherein:
- said first end portion (2) includes one or more first apertures (8) configured for allowing the inlet of a liquid into said internal volume (V),
- said second end portion (4) including a plurality of second apertures (18) configured for allowing the outlet of a beverage that can be obtained by interaction of said liquid with a substance for the preparation of a liquid beverage within said internal volume (V),
wherein furthermore at least one of said first end portion (2) and second end portion (4) is removable,
the container being **characterized in that** each second aperture (18) of the second end portion (4) defined by at least one slot (18, 180, 181, 182).

2. The container (1) according to Claim 1, wherein each second aperture (18) of the second end portion (4) is defined by at least one rectilinear slot (18, 180, 181, 182).

3. The container (1) according to Claim 1 or Claim 2, wherein each slot (18, 180, 181, 182) includes a primary development direction and a secondary development direction, wherein the slot (18, 180, 181, 182) develops predominantly along said primary development direction.

4. The container (1) according to Claim 3, wherein each slot is **characterized by** a ratio between the dimension in the primary development direction and the dimension in the secondary development direction comprised between 3 and 100, preferably between 6 and 10.

5. The container (1) according to Claim 1 or Claim 2, wherein each second aperture (18) is defined by two rectilinear slots (180, 181) incident to one another.

6. The Container (1) according to Claim 1 or Claim 2, wherein each second aperture (18) of the second end portion (4) is defined by a first (180), a second (181), and a third (182) rectilinear slots, wherein said third rectilinear slot (182) is incident to said first and second rectilinear slots (180, 181).

7. The container (1) according to Claim 6, wherein each aperture of the second end portion has a geometry chosen between a "U" shape and a "Z" shape.

8. The container (1) according to any of the previous claims, further having a substantially frustoconical shape, wherein said first end portion (2) has a lower diameter than said second end portion (4).

9. The container (1) according to any of the previous claims, wherein the removable end portion (2, 4) is coupled to the shell (6) by means of a threaded joint (24, 26; 28, 30).

10. The container (1) according to Claim 1, wherein each second aperture (18) is pre-formed into said second end portion (4).

## Patentansprüche

1. Wiederverwendbarer Behälter (1) für eine Substanz zur Herstellung eines Flüssiggetränks, insbesondere ausgelegt zur Verwendung als Kapsel für einen Getränkeausgabeautomaten, wobei der Behälter Folgendes beinhaltet:
- einen ersten Endabschnitt (2),
- einen zweiten Endabschnitt (4),
- einen Mantel (6), der zwischen dem ersten Endabschnitt und dem zweiten Endabschnitt (2, 4) umfasst ist und mit diesen ein zum Unterbringen einer Substanz zur Herstellung eines Flüssiggetränks ausgelegtes Innenvolumen (V) des Behälters (1) begrenzt,
wobei:
- der erste Endabschnitt (2) eine oder mehrere erste Öffnungen (8) beinhaltet, die dafür ausgelegt sind, den Zufluss einer Flüssigkeit in das Innenvolumen (V) zuzulassen,
- der zweite Endabschnitt (4) eine Vielzahl zweiter Öffnungen (18) beinhaltet, die dafür ausgelegt sind, den Abfluss eines Getränks zuzulassen, das durch Wechselwirkung der Flüssigkeit mit einer Substanz zur Herstellung eines Flüssiggetränks innerhalb des Innenvolumens (V) erhalten werden kann,
wobei des Weiteren der erste Endabschnitt (2) und/oder der zweite Endabschnitt (4) abnehmbar ist,
wobei der Behälter **dadurch gekennzeichnet ist, dass** jede zweite Öffnung (18) des zweiten Endabschnitts (4) durch mindestens einen Schlitz (18, 180, 181, 182) definiert ist.

2. Behälter (1) nach Anspruch 1, wobei jede zweite Öffnung (18) des zweiten Endabschnitts (4) durch mindestens einen geradlinigen Schlitz (18, 180, 181, 182) definiert ist.

3. Behälter (1) nach Anspruch 1 oder Anspruch 2, wobei jeder Schlitz (18, 180, 181, 182) eine primäre Ausbildungsrichtung und eine sekundäre Ausbildungsrichtung beinhaltet, wobei der Schlitz (18, 180, 181, 182) überwiegend entlang der primären Ausbildungsrichtung ausgebildet ist.

4. Behälter (1) nach Anspruch 3, wobei jeder Schlitz **gekennzeichnet ist durch** ein Verhältnis zwischen der Abmessung in der primären Ausbildungsrichtung und der Abmessung in der sekundären Ausbildungsrichtung, welches zwischen 3 und 100, bevorzugt zwischen 6 und 10 umfasst ist.

5. Behälter (1) nach Anspruch 1 oder Anspruch 2, wobei jede zweite Öffnung (18) durch zwei aufeinandertreffende geradlinige Schlitze (180, 181) definiert ist.

6. Behälter (1) nach Anspruch 1 oder Anspruch 2, wobei jede zweite Öffnung (18) des zweiten Endabschnitts (4) durch einen ersten (180), einen zweiten (181) und einen dritten (182) geradlinigen Schlitz definiert ist, wobei der dritte geradlinige Schlitz (182) auf den ersten und zweiten geradlinigen Schlitz (180, 181) trifft.

7. Behälter (1) nach Anspruch 6, wobei jede Öffnung des zweiten Endabschnitts eine Geometrie aufweist, die ausgewählt ist aus einer "U"-Form und einer "Z"-Form.

8. Behälter (1) nach einem der vorhergehenden Ansprüche, der ferner im Wesentlichen eine Kegelstumpfform aufweist, wobei der erste Endabschnitt (2) einen geringeren Durchmesser aufweist als der zweite Endabschnitt (4).

9. Behälter (1) nach einem der vorhergehenden Ansprüche, wobei der abnehmbare Endabschnitt (2, 4) mittels einer Schraubverbindung (24, 26; 28, 30) an den Mantel (6) gekoppelt ist.

10. Behälter (1) nach Anspruch 1, wobei jede zweite Öffnung (18) in den zweiten Endabschnitt (4) vorgeformt ist.

## Revendications

1. Récipient réutilisable (1) pour une substance pour la préparation d'une boisson liquide, configuré en particulier pour être utilisé comme capsule pour une machine de distribution de boissons, le récipient comportant :
- une première partie d'extrémité (2),
- une deuxième partie d'extrémité (4),
- une coque (6) comprise entre lesdites première et deuxième parties d'extrémité (2, 4) et délimitant avec celles-ci un volume interne (V) du récipient (1) configuré pour recevoir une substance pour la préparation d'une boisson liquide,
dans lequel :
- ladite première partie d'extrémité (2) comporte une ou plusieurs première(s) ouverture(s) (8) configurée(s) pour permettre l'entrée d'un liquide dans ledit volume interne (V),
- ladite deuxième partie d'extrémité (4) comportant une pluralité de deuxièmes ouvertures (18) configurées pour permettre la sortie d'une boisson qui peut être obtenue par interaction dudit liquide avec une substance pour la préparation d'une boisson liquide à l'intérieur dudit volume interne (V),
où en outre au moins l'une de ladite première partie d'extrémité (2) et de ladite deuxième partie d'extrémité (4) est amovible,
le récipient étant **caractérisé en ce que** chaque deuxième ouverture (18) de la deuxième partie d'extrémité (4) est définie par au moins une fente (18, 180, 181, 182).

2. Récipient (1) selon la revendication 1, dans lequel chaque deuxième ouverture (18) de la deuxième partie d'extrémité (4) est définie par au moins une fente rectiligne (18, 180, 181, 182).

3. Récipient (1) selon la revendication 1 ou 2, dans lequel chaque fente (18, 180, 181, 182) comporte une direction de développement primaire et une direction de développement secondaire, où la fente (18, 180, 181, 182) se développe principalement le long de ladite direction de développement primaire.

4. Récipient (1) selon la revendication 3, dans lequel chaque fente est **caractérisée par** un rapport entre la dimension dans la direction de développement primaire et la dimension dans la direction de développement secondaire compris entre 3 et 100, de préférence entre 6 et 10.

5. Récipient (1) selon la revendication 1 ou 2, dans lequel chaque deuxième ouverture (18) est définie par deux fentes rectilignes (180, 181) incidentes l'une sur l'autre.

6. Récipient (1) selon la revendication 1 ou 2, dans lequel chaque deuxième ouverture (18) de la deuxième partie d'extrémité (4) est définie par une première (180), une deuxième (181) et une troisième (182) fente rectiligne, où ladite troisième fente rectiligne (182) est incidente sur lesdites première et deuxième fentes rectilignes (180, 181).

7. Récipient (1) selon la revendication 6, dans lequel chaque ouverture de la deuxième partie d'extrémité a une géométrie choisie entre une forme en "U" et une forme en "Z".

8. Récipient (1) selon l'une des revendications précédentes, ayant en outre une forme essentiellement tronconique, dans lequel ladite première partie d'extrémité (2) a un diamètre inférieur à celui de ladite deuxième partie d'extrémité (4).

9. Récipient (1) selon l'une des revendications précédentes, dans lequel la partie d'extrémité amovible (2, 4) est couplée à la coque (6) au moyen d'un joint fileté (24, 26 ; 28, 30).

10. Récipient (1) selon la revendication 1, dans lequel chaque deuxième ouverture (18) est préformée dans ladite deuxième partie d'extrémité (4).
